# EUROPÄISCHE PATENTSCHRIFT

(11) **EP 2 421 203 B1**
(45) Veröffentlichungstag und Bekanntmachung des Hinweises auf die Patenterteilung: **12.12.2012**
(21) Anmeldenummer: 10173425.9
(22) Anmeldetag: 19.08.2010
(51) Int. Cl.: H04L 12/40, H04L 27/26

(54) **AS-i Kommunikationsbauteil**
AS-i communication component
Composant de communication AS-i

(43) Veröffentlichungstag der Anmeldung: 22.02.2012
(73) Patentinhaber: SIEMENS AKTIENGESELLSCHAFT, 80333 München (DE)
(72) Erfinder: Wiesgickl, Bernhard, 92249 Vilseck (DE)

(56) Entgegenhaltungen:
- WO-A1-2007/087996
- WO-A1-2007/102779
- US-A1- 2009 043 939

## Beschreibung

Die Erfindung betrifft ein AS-i Kommunikationsbauteil, zur Kommunikation auf einem nach einem AS-interface Standard ausgeführten Feldbussystem, sowie ein AS-i Modul.

Ein Feldbus ist ein industrielles Kommunikationssystem auf der untersten Steuerungsebene eines Automatisierungssystems, das eine Vielzahl von Feldgerätebaugruppen wie Messfühler (Sensoren), Stellglieder und Antriebe (Aktoren), aber auch Motorstarter und Frequenzumrichter mit einem übergeordneten Steuergerät verbindet.

AS-interface (AS-i = Aktor-Sensor-Interface) ist ein möglicher Kommunikationsstandard zur Kommunikation zwischen einer mit dem Steuerungsgerät verbundenen Masterbaugruppe und Feldgerätegruppen (Slaves) über einen solchen Feldbus.

Bei einem nach den AS-interface Spezifikationen ausgebildeten Feldbus hat die Masterbaugruppe/der Master als einziger das Recht, unaufgefordert auf den Feldbus zuzugreifen. Der Master sendet dabei zyklisch an alle Slaves eine Anfrage und tauscht so mit den Slaves Daten über ein serielles Übertragungsprotokoll mit einer Nutzdatenbreite von 4 Bit aus. Die Slaves dürfen und können von sich aus nicht auf den Feldbus zugreifen und müssen warten, bis sie vom Master gefragt werden. Jedem der Slaves ist dazu eine eindeutige Adresse zugewiesen. In einem AS-interface können nach derzeitiger Spezifikation (Vers. 3.0) so maximal 62 Teilnehmer an der Masterbaugruppe angeschlossen werden.

Als Übertragungsmedium für den Feldbus wird eine bevorzugt als Flachbandkabel ausgeführte, ungeschirmte zweiadrige Leitung verwendet, die gleichzeitig auch als Stromversorgung für Slaves dienen kann. Das Übertragungsprotokoll wird dazu auf die Spannungsversorgung aufmoduliert. Es kommt dabei die Manchester-Codierung und eine alternierende Puls Modulation Codierung (APM-Codierung) zum Einsatz. So können Bit-Zeiten von 6µs verwirklicht werden.

FIG 2 zeigt das aktuelle Funktionsprinzip einer Kommunikation mittels AS-i. Hierbei sind schematisch die einzelnen Schritte des Sende- / sowie Empfangvorgangs abgebildet.

FIG 3 zeigt einen Aufbau eines Standard AS-i Kommunikationsbauteils innerhalb eines Standard AS-i Moduls (Masterbaugruppe oder Slave).

US 2009/043939 A1 offenbart eine Vorrichtung, welche Signale mehrerer Notschalter derart aufbereiten kann, dass eine Übertragung dieser Signale auf einem AS-Interface Bus ermöglicht wird.

WO 2007/102779 A1 offenbart eine Vorrichtung mittels welcher zwei unterschiedliche Feldbusse miteinander gekoppelt werden können, so dass einen Kommunikation zwischen beiden Feldbussen erfolgen kann. Ein erstes Interface dient dem Anschluss des ersten Feldbusses und ein zweites Interface dient dem Anschluss des zweiten Feldbusses. Mittels eines Controllers kann der Datenverkehr zwischen dem ersten und zweiten Feldbus überwacht werden.

WO 2007/087996 A1 offenbart eine Vorrichtung umfassend einen über eine Versorgungsleitung versorgten Verbraucher, wobei über die Versorgungsleitung elektrische Leistung und Daten übertragbar sind, wobei das Leistungssignal und das Datensignal abwechselnd übertragbar sind.

Es ist Aufgabe der vorliegenden Erfindung ein verbessertes AS-i Kommunikationsbauteil zur Kommunikation über eine AS-i Leitung bereitzustellen. Vorzugsweise sollte das Kommunikationsbauteil platzsparend ausgebildet und/oder kostengünstig herstellbar sein.

Eine Aufgabe wird gelöst durch eine Vorrichtung gemäß Anspruch 1 und ein Verfahren gemäß Anspruch 12.

Vorteilhafte Weiterbildungen der Erfindung sind in den abhängigen Ansprüchen 2 bis 11 und 13 bis 15 angegeben.

Unter den Begriff Kommunikation wird vorzugsweise das Senden und/oder Empfangen von Kommunikationssignalen verstanden.

Um die Kommunikation mittels AS-i zu verbessern wird über ein erweitertes AS-i Kommunikationssignal, welches ein höheres Frequenzspektrum nutzt als das Standard AS-i Kommunikationssignal, ein zusätzliches Kommunikationssignal über die AS-i Leitung vorzugsweise parallel übertragen. Mittels des erweiterten AS-i Kommunikationssignals können somit zusätzliche Daten übertragen werden.

Das erweiterte Kommunikationssignal nutzt hierbei im Vergleich zur Standard AS-i Kommunikation ein höheres Kommunikationsfrequenzspektrum, im Folgenden erweitertes Kommunikationsfrequenzspektrum genannt. Die Kommunikation über das erweiterte Kommunikationsfrequenzspektrum erfolgt hierbei vorzugsweise über das OFDM-Kommunikationsverfahren (OFDM = Orthogonal Frequency Division Multiplex).

Da das Senden und/oder Empfangen des Standard AS-i Kommunikationssignals und des erweiterten AS-i Kommunikationssignals über die AS-i Leitung über ein gemeinsames Kommunikationsbauteil erfolgt können insbesondere Kosten sowie Platz eingespart werden.

In einer vorteilhaften Ausführungsform der Erfindung ist das Kommunikationsbauteil ein ASIC oder ein FPGA Baustein. Ein AS-i Modul muss somit vorzugsweise lediglich einen ASIC oder FPGA Baustein zur Kommunikation verbauen. Herstellkosten sowie der Platzbedarf können somit reduziert werden.

In einer weiteren vorteilhaften Ausführungsform der Erfindung liegt das zum Senden und/oder Empfangen genutzte Frequenzspektrum des Standard AS-i Kommunikationssignals im Bereich von 50 kHz bis 500 kHz und das zum Senden und/oder Empfangen genutzte Frequenzspektrum des erweiterten AS-i Kommunikationssignals im Bereich von 1 MHz bis 10 MHz.

In einer weiteren vorteilhaften Ausführungsform der Erfindung verwendet das Kommunikationsbauteil zum Senden und/oder Empfangen des erweiterten AS-i Kommunikationssignals das Orthogonal Frequency Division Multiplex Verfahren.

In einer weiteren vorteilhaften Ausführungsform der Erfindung umfasst zum Empfangen des Standard AS-i Kommunikationssignals das Kommunikationsbauteil (31) eine erste Analog/Digital-Wandlereinheit und zum Empfangen des erweiterten AS-i Kommunikationssignals das Kommunikationsbauteil (31) eine zweite Analog/Digital-Wandlereinheit, wobei vorzugsweise die erste Analog/Digital-Wandlereinheit einen Hochpassfilter und die zweite Analog/Digital-Wandlereinheit einen Tiefpassfilter umfasst.

In einer weiteren vorteilhaften Ausführungsform der Erfindung umfasst zum Empfangen des Standard AS-i Kommunikationssignals und des erweiterten AS-i Kommunikationssignals das Kommunikationsbauteil eine gemeinsam genutzte Analog/Digital-Wandlereinheit. Die Analog/Digital-Wandlereinheit ist hierbei vorzugsweise derart ausgebildet, um aus den Standard AS-i Kommunikationssignalen und den erweiterten AS-i Kommunikationssignalen jeweils einen digitalisierten Wert zu bilden.

In einer weiteren vorteilhaften Ausführungsform der Erfindung ist der Analog/Digital-Wandlereinheit für das erweiterte Kommunikationssignal eine FFT-Einheit und für das Standard AS-i Kommunikationssignal eine Empfangdateneinheit nachgeschaltet und das Kommunikationsbauteil umfasst die FFT-Einheit und die Empfangdateneinheit. Vorzugsweise ist die FFT-Einheit eine OFDM-Empfangsdateneinheit nachgeschaltet. Über die Empfangdateneinheit und/oder OFDM-Empfangsdateneinheit wird letztendlich die gesandte Bit-Sequenz zurück gewonnen.

In einer weiteren vorteilhaften Ausführungsform der Erfindung umfasst zum Senden des Standard AS-i Kommunikationssignals das Kommunikationsbauteil eine Standard-Treibereinheit und zum Senden des erweiterten AS-i Kommunikationssignals das Kommunikationsbauteil eine OFDM-Treibereinheit.

Alternativ können auch die Standard-Treibereinheit sowie die OFDM-Treibereinheit außerhalb des Kommunikationsbauteils angeordnet sein.

In einer weiteren vorteilhaften Ausführungsform der Erfindung umfasst zum Senden des Standard AS-i Kommunikationssignals und des erweiterten AS-i Kommunikationssignals das Kommunikationsbauteil eine gemeinsam genutzte Digital/Analog-Wandlereinheit.

Vorzugsweise umfasst das Kommunikationsbauteil zum Senden eines Standard AS-i Kommunikationssignals eine Sendedateneinheit und zum Senden eines erweiterten AS-i Kommunikationssignals eine OFDM-Sendeeinheit.

In einer weiteren vorteilhaften Ausführungsform der Erfindung umfasst ein AS-i Modul ein Kommunikationsbauteil zur Kommunikation über einer AS-i Leitung. Ein AS-i Modul ist insbesondere ein Slave oder ein Master.

In einer weiteren vorteilhaften Ausführungsform der Erfindung ist dem Kommunikationsbauteil zum Senden eines Standard AS-i Kommunikationssignals und eines erweiterten AS-i Kommunikationssignals über die AS-i Leitung eine OFDM-Treibereinheit und/oder Standard-Treibereinheit nachgeschaltet. Die OFDM-Treibereinheit und/oder Standard-Treibereinheit ist hierbei außerhalb des Kommunikationsbauteils angeordnet.

In einer weiteren vorteilhaften Ausführungsform der Erfindung erfolgt das Senden und/oder Empfangen des erweiterten AS-i Kommunikationssignals mittels des Orthogonal Frequency Division Multiplex Verfahren

In einer weiteren vorteilhaften Ausführungsform der Erfindung wird das Standard AS-i Kommunikationssignal und das erweiterte AS-i Kommunikationssignals über eine gemeinsam genutzte Analog/Digital-Wandlereinheit empfangen.

In einer weiteren vorteilhaften Ausführungsform der Erfindung wird das Standard AS-i Kommunikationssignal und das erweiterte AS-i Kommunikationssignals über eine gemeinsam genutzte Digital/Analog-Wandlereinheit gesendet.

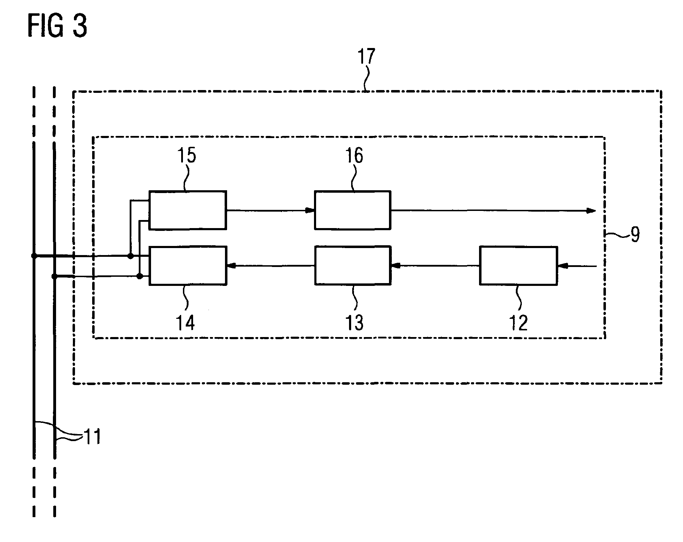

In einer weitern vorteilhaften Ausführungsform weist ein erweitertes AS-i Modul (Slave oder Master) einen wie unter FIG 3 beschriebenes Standard AS-i Kommunikationsbauteil und ein erweitertes Kommunikationsbauteil auf, um neben der Standard AS-i Kommunikation eine erweiterte AS-i Kommunikation bereitzustellen. Das Standard-Kommunikationsbauteil und das erweiterte Kommunikationsbauteil werden vorzugsweise jeweils durch einen ASIC oder FPGA Baustein gebildet. Dadurch, dass das erweiterte AS-i Modul zum einen über das Standard AS-i-Kommunikationsbauteil Standard AS-i Kommunikationssignale senden und empfangen kann, als auch über das erweiterte Kommunikationsbauteil erweiterte AS-i Kommunikationssignale senden und empfangen kann, kann eine erweiterte Kommunikation über eine bestehende AS-i Leitung erfolgen. Auf diese Weise kann insbesondere eine erhöhte Datenrate bereitgestellt werden, so dass schneller größere Datenmengen übertragen werden können.

Im Folgenden werden die Erfindung und die Ausgestaltung der Erfindung anhand der in den FIGen dargestellten Ausführungsbeispiele näher beschrieben und erläutert. Es zeigen:

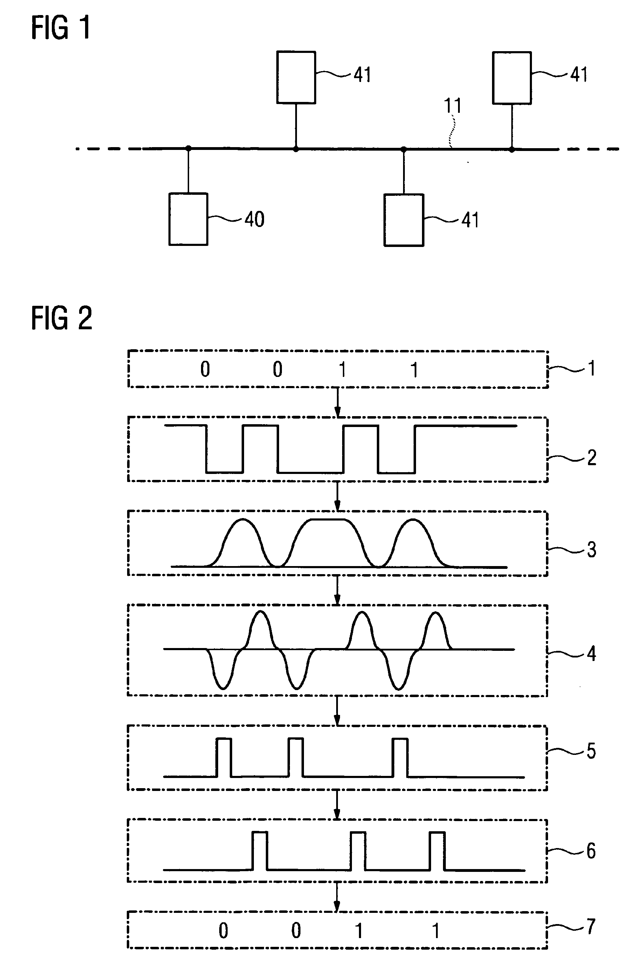

- FIG 1: eine schematische Darstellung einer Masterbaugruppe, welche über ein Buskabel mit mehreren Slaves verbunden ist,
- FIG 2: das aktuelle Funktionsprinzip einer Kommunikation mittels AS-i,
- FIG 3: einen Aufbau eines Standard AS-i Kommunikationsbauteils innerhalb eines Standard AS-i Moduls,

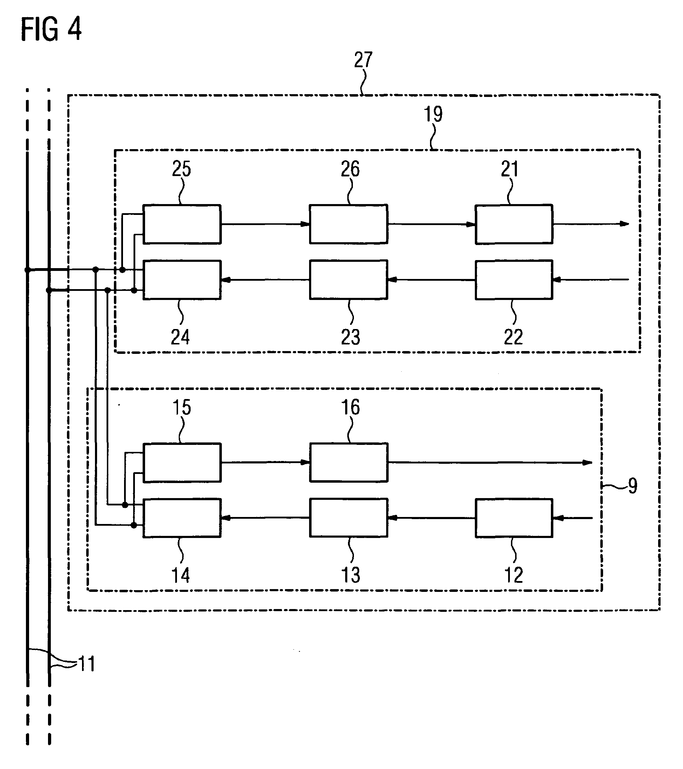

- FIG 4: einen Aufbau eines erweiterten AS-i Moduls,

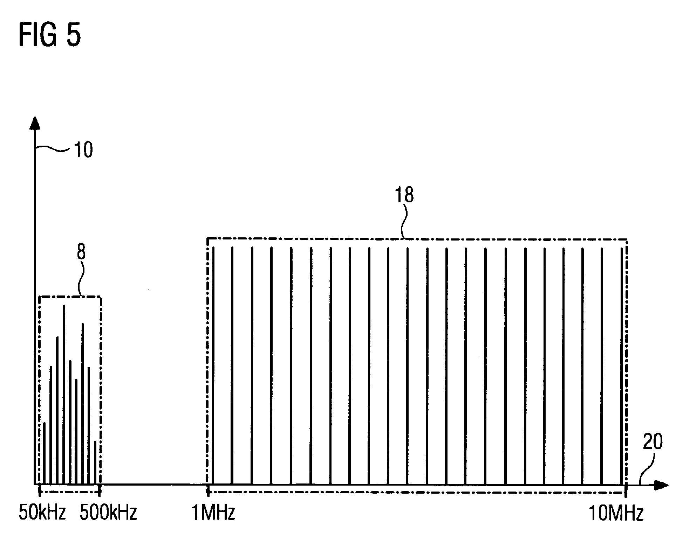

- FIG 5: ein von einem Standard AS-i Kommunikationsbaustein und von einem erweiterten AS-i Kommunikationsbaustein belegtes Frequenzspektrum, und

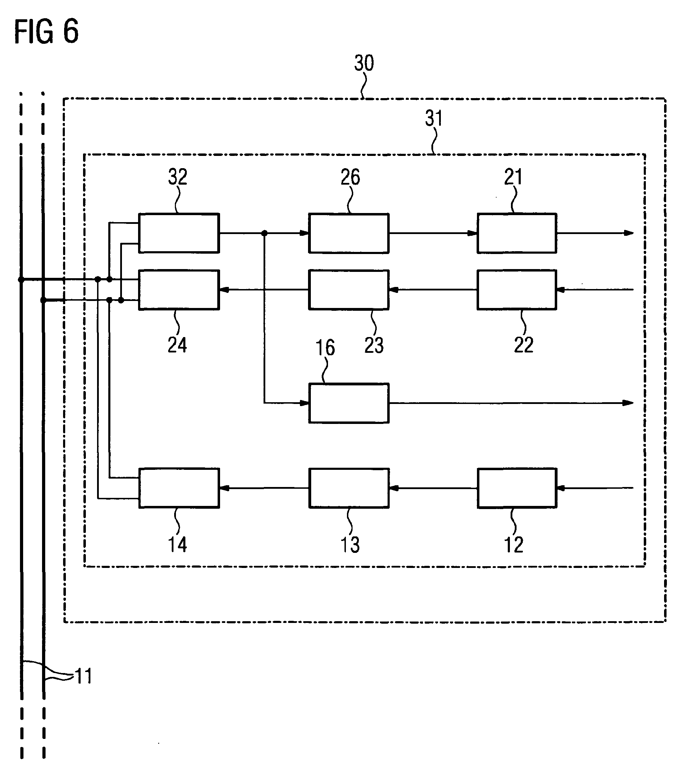

- FIG 6: einen Aufbau eines Kommunikationsbauteils, zum Senden und Empfangen eines Standard AS-i Kommunikationssignals als auch eines erweiterten AS-i Kommunikationssignals über eine AS-i Leitung.

FIG 1 zeigt eine schematische Darstellung einer Masterbaugruppe 40, welche über eine AS-i Leitung (Buskabel) 3 mit mehreren Slaves 41 verbunden ist. Das abgebildete AS-i Feldbussystem umfasst somit die Masterbaugruppe 40, drei Slaves 41 und das AS-i Buskabel 11. Mithilfe des AS-i Systems lassen sich einfache Sensoren und Aktuatoren (Slaves 41) über einen Zweileiterbus 11 inklusive der Spannungsversorgung verkabeln. Jeder AS-interface Slave 41 ist frei adressierbar und kann an beliebiger Stelle mit dem Buskabel 11 verbunden werden. Dadurch, dass jeder Slave 41 eine spezifische Adresse aufweist, wird der jeweilige Slave 41 zur Kommunikation mit der Masterbaugruppe 40 gezielt von der Masterbaugruppe 40 adressiert. Ein Slave 41 kommuniziert niemals selbstständig, sondern muss zur Kommunikation mit der Masterbaugruppe 40 von dieser adressiert und somit "angesprochen" werden.

FIG 2 zeigt das aktuelle Funktionsprinzip einer Kommunikation mittels AS-i. Hierbei sind schematisch die einzelnen Schritte des Sende- / sowie Empfangvorgangs abgebildet.

Bei dem Sendevorgang wird in einem ersten Schritt beispielsweise von der Masterbaugruppe eine zu übertragende Bit-Sequenz 1 von einer Sendedateneinheit in Manchester-Codierung zu einer Rechteckimpulsfolge 2 codiert.

In einem anschließenden Schritt werden aus der Rechteckimpulsfolge 2 Stromimpulse 3 generiert. Diese Stromimpulse 3 werden an einer mit der Masterbaugruppe verbundenen AS-i Leitung angelegt. Das Umwandeln der Rechteckimpulsfolge 2 in Stromimpulse 3 erfolgt durch eine Standard-Digital/Analog-Wandlereinheit. Diese Stromimpulse 3 werden durch eine Standard-Treibereinheit verstärkt und auf die AS-i Leitung gegeben.

Durch die angelegten Stromimpulse 3, welche sich im Bereich von ca. 0 bis 60 mA befinden, entstehen auf der AS-i Leitung Spannungspegel 4, welche einen Spannungshub von ca. ± 2 V aufweisen. Die Spannungspegel 4 bilden letztendlich das Kommunikationssignal auf der AS-i Leitung. Ein Slave, welcher mit der AS-i Leitung verbunden ist, kann nun diese Spannungspegel 4 (das Kommunikationssignal auf der AS-i-Leitung) detektieren. Die Spannungspegel 4 werden von einem Empfangsgerät des Slaves über eine Impulsformereinheit in negative Signale 5 oder positive Signale 6 umgewandelt, so dass in einem weiteren Schritt durch eine Empfangsdateneinheit die zu übertragende Bit-Sequenz 7 rekonstruiert werden kann.

Auf diese Weise kann eine Kommunikation zwischen der Masterbaugruppe und einem Slave oder umgekehrt erfolgen. Das entstehende Frequenzspektrum des Standard AS-i Kommunikationssignals ist als Standard AS-i Kommunikationsfrequenzspektrum 8 in der FIG 5 dargestellt. Hierbei wird ein Frequenzspektrum von ca. 50 bis 500 kHz belegt.

FIG 3 zeigt einen Aufbau eines Standard AS-i Kommunikationsbauteils 9 innerhalb eines Standard AS-i Moduls 17. Das Standard AS-i Kommunikationsbauteil 9 ist in einem Standard AS-i Modul 17 (Masterbaugruppe oder Slave) verbaut und ermöglicht eine Standard AS-i Kommunikation über die AS-i Leitung 11. Zur Standard AS-i Kommunikation ist das AS-i Kommunikationsbauteils 9 mit der zweiadrigen AS-i Leitung 11 elektrisch leitend verbunden, so dass das Standard AS-i Kommunikationsbauteil 9 Standard AS-i Kommunikationssignale auf der AS-i Leitung 11 senden sowie empfangen kann. Mittels des Standard AS-i Kommunikationsbauteils 9 wird somit eine Standard AS-i Kommunikation, d.h. ein wie unter FIG 2 beschriebenes Senden und Empfangen von Bit Sequenzen, über eine AS-Leitung 11 ermöglicht. Das Senden sowie Empfangen der Standard AS-i Kommunikationssignale über die zweiadrige AS-i Leitung 11 durch das Standard AS-i Kommunikationsbauteil 9 erfolgt innerhalb eines Frequenzspektrums von ca. 50 bis 500 kHz.

Zum Senden einer Bit-Sequenz wird zunächst durch eine Sendedateneinheit 12 die Bit-Sequenz in Manchester-Codierung zu einer Rechteckimpulsfolge codiert. Diese Rechteckimpulsfolge wird durch eine Standard-Digital/Analog-Wandlereinheit 13 (D/A-Wandlereinheit 13) in analoge Werte umgewandelt. Durch eine nachgeschaltete Standard-Treibereinheit 14 werden diese analogen Werte in Stromimpulse verstärkt und auf die AS-i Leitung 11 eingespeist. Die hierdurch auf der AS-i Leitung 11 generierten Spannungspegel (Standard AS-i Kommunikationssignale) können durch ein mit der AS-i Leitung 11 verbundenes weiteres AS-i Modul 17 dekodiert werden, so dass das weitere AS-i Modul 17 die gesandte Bit-Sequenz empfängt.

Zum Empfangen einer über eine AS-i Leitung 11 gesandte Bit-Sequenz erfolgt zunächst ein Spannungsabgriff zwischen den beiden Adern der AS-i Leitung 11. Ein ermittelter Spannungspegel auf der AS-i Leitung 11 wird letztendlich von einer Impulsformereinheit 15 in negative und positive Signale umgewandelt, so dass anhand der negativen und positiven Signale durch eine Empfangsdateneinheit 16 die gesandte Bit-Sequenz decodiert werden kann.

Das abgebildete AS-i Modul 17 kann somit eine zu übertragende Bit-Sequenz auf der AS-i Leitung 11 als AS-i Standard-Kommunikationssignal senden sowie empfangen.

FIG 4 zeigt einen Aufbau eines erweiterten AS-i Moduls 27. Dieses erweiterte AS-i Modul 27 weist zum einen das unter FIG 2 beschriebne Standard AS-i Kommunikationsbauteil 9 auf. Mittels dieses Standard Kommunikationsbauteils 9 kann auf einem Frequenzspektrum von ca. 50 bis 500 kHz kommuniziert werden.

Ferner ist ein zusätzliches erweitertes Kommunikationsbauteil 19 mit der AS-i Leitung 11 elektrisch leitend verbunden. Über das zusätzliche erweiterte Kommunikationsbauteil 19 kann eine erweiterte Kommunikation auf der AS-i Leitung 11 erfolgen. Hierbei wird ein Kommunikationsspektrum im Bereich von ca. 1 bis über 10 MHz genutzt. Die Kommunikation innerhalb dieses Frequenzspektrums erfolgt gemäß des OFDM-Kommunikationsverfahrens. OFDM (Orthogonal Frequency Division Multiplex) ist ein äußerst bandbreiteneffizientes Mehrträgerverfahren, das den Übertragungskanal sehr effektiv nutzt. Bei den OFDM-Decodern (FFT-Einheit 26) wird zum Empfang eine schnelle Fouriertransformation (FFT) benutzt, die die iFFT von der OFDM-Sendeeinheit 22 rückgängig macht. Die Eingangsdaten der FFT sind die digitalisierten Werte des Signals aus einer OFDM-Analog/Digital-Wandlereinheit 25.

Zum Senden einer erweiterten Bit-Sequenz mittels des erweiterten Kommunikationsbauteils 19 wird zunächst die erweiterte Bit-Sequenz von der OFDM-Sendeeinheit 22 in OFDM-Signale (iFFT) codiert. Anschließend werden die codierten OFDM-Signale von einer OFDM-Digital/Analog-Wandlereinheit 23 in OFDM-Kommunikationssignale umgewandelt über eine OFDM-Treibereinheit 24 verstärkt und auf das AS-i Kabel 11 gegeben.

Zum Empfangen einer erweiterten Bit-Sequenz mittels des erweiterten Kommunikationsbauteils 19 werden die OFDM-Kommunikationssignale von der AS-i Leitung 11 abgegriffen und auf die OFDM-Analog/Digital-Wandlereinheit 25 geführt. Die OFDM-Analog/Digital-Wandlereinheit 25 digitalisiert das analoge OFDM-Kommunikationssignal. Aus dem digitalisierten Signal wird über die FFT-Einheit 26 und einer nachgeschalteten OFDM-Empfangsdateneinheit 21 die erweiterte Bit-Sequenz zurück gewonnen.

Hierdurch wird über ein erweitertes Frequenzspektrum eine erhöhte Datenrate von 2 bis 3 MBit/s erzielt. Im Vergleich hierzu hat das Standard AS-i Kommunikationsverfahren eine Datenrate von bis zu 160 kBit/s.

Bei dem in FIG 4 abgebildeten erweiterten AS-i Modul 27 werden zwei Kommunikationsbauteile (ASIC oder FPGA) verwendet, nämlich das Standard AS-i Kommunikationsbauteils 9 und das erweitertes Kommunikationsbauteil 19.

FIG 5 zeigt ein von einem Standard AS-i Kommunikationsbaustein und von einem erweiterten AS-i Kommunikationsbaustein belegtes Frequenzspektrum. Über die erste Achse 10 wird die Amplitude und über die zweite Achse 20 die Frequenz visualisiert, so dass das jeweilige Kommunikationsfrequenzspektrum ersichtlich ist. Es ist ersichtlich, das das Standard AS-i Kommunikationsfrequenzspektrum 8 im Bereich von ca. 50 kHz bis 500 kHz liegt, wohingegen das erweiterte AS-i Kommunikationsfrequenzspektrum 18 im Bereich von ca. 1 MHz bis über 10 MHz liegt.

FIG 6 zeigt einen Aufbau eines Kommunikationsbauteils 31, zum Senden und Empfangen eines Standard AS-i Kommunikationssignals als auch eines erweiterten AS-i Kommunikationssignals über eine AS-i Leitung 11. Im Vergleich zu dem in FIG 4 abgebildeten erweiterten AS-i Modul weist das hier abgebildete verbesserte AS-i Modul 30 lediglich ein Kommunikationsbauteil 31 (ASIC oder FPGA Baustein) zur Standard AS-i Kommunikation als auch zur erweiterten AS-i Kommunikation auf.

Das Empfangen der der Standard AS-i Kommunikationssignale als auch der erweiterten AS-i Kommunikationssignale erfolgt hierbei über ein gemeinsame Analog-/Digital-Wandlereinheit 32. Der Analog-/Digital-Wandlereinheit 32 ist zum Empfangen der erweiterten AS-i Kommunikationssignale eine FFT-Einheit 26 sowie eine OFDM-Empfangsdateneinheit 21 nachgeschaltet, so dass eine über das erweiterte AS-i Kommunikationssignal gesandte Bit-Sequenz zurück gewonnen werden kann. Zum Empfangen der Standard AS-i Kommunikationssignale ist der Analog-/Digital-Wandlereinheit 32 eine Empfangsdateneinheit 16 nachgeschaltet, so dass eine über das Standard AS-i Kommunikationssignal gesandte Bit-Sequenz zurück gewonnen werden kann.

Zum Senden der Standard AS-i Kommunikationssignale als auch der erweiterten AS-i Kommunikationssignale umfasst das Kommunikationsbauteil 31 eine OFDM-Digital/Analog-Wandlereinheit 23 für das erweiterte AS-i Kommunikationssignal und eine Standard-Digital/Analog-Wandlereinheit 13 für das Standard AS-i Kommunikationssignal. Ebenso ist es denkbar, dass für das Standard AS-i Kommunikationssignal als auch für das erweiterte AS-i Kommunikationssignal eine gemeinsam genutzte Digital/Analog-Wandlereinheit verwendet wird. Die Digital/Analog-Wandlereinheit 13, 23 bildet aus den digitalen Werten einen analogen Wert.

Eine Sendedateneinheit 12 ist vor der Standard-Digital/Analog-Wandlereinheit 13 vorgeschaltet und codiert eine zu übertragende Bit-Sequenz gemäß der Standard-AS-i Kommunikation mittels der Manchaster-Codierung in eine Rechteckimpulsfolge. Eine OFDM-Sendeeinheit 22 hingegen codiert gemäß des Orthogonal Frequency Division Multiplex Verfahrens die zu übertragende erweiterte Bit-Sequenz zunächst in OFDM-Signale (iFFT) und leitet diese an die OFDM-Digital/Analog-Wandlereinheit 23 weiter.

Zur Verstärkung des Signals ist der Standard-Digital/Analog-Wandlereinheit 13 und der OFDM-Digital/Analog-Wandlereinheit 23 jeweils eine Treibereinheit (Standard-Treibereinheit 14 und OFDM-Treibereinheit 24) nachgeschaltet. Es ist ebenso denkbar, dass die Standard-Treibereinheit 14 und die OFDM-Treibereinheit 23 außerhalb des Kommunkationsbauteils 31 angeordnet ist und mit diesem und der AS-i Leitung 11 elektrisch leitend verbunden ist.

## Patentansprüche

1. Kommunikationsbauteil (31), zur Kommunikation über eine AS-i (11) Leitung, wobei ein Senden und/oder Empfangen eines Standard AS-i Kommunikationssignals und eines erweiterten AS-i Kommunikationssignals über eine AS-i Leitung (11) über das gemeinsame Kommunikationsbauteil (31) erfolgt, **dadurch gekennzeichnet, dass** das zum Senden und/oder Empfangen genutzte Frequenzspektrum des erweiterten AS-i Kommunikationssignals im Bereich von 1 MHz bis 10 MHz liegt.

2. Kommunikationsbauteil (31) nach Anspruch 1, wobei das Kommunikationsbauteil (31) ein ASIC oder ein FPGA Baustein ist.

3. Kommunikationsbauteil (31) nach einem der vorhergehenden Ansprüche, wobei das zum Senden und/oder Empfangen genutzte Frequenzspektrum des Standard AS-i Kommunikationssignals im Bereich von 50 kHz bis 500 kHz.

4. Kommunikationsbauteil (31) nach einem der vorhergehenden Ansprüche, wobei das Kommunikationsbauteil zum Senden und/oder Empfangen des erweiterten AS-i Kommunikationssignals das Orthogonal Frequency Division Multiplex Verfahren verwendet.

5. Kommunikationsbauteil (31) nach einem der vorhergehenden Ansprüche, wobei zum Empfangen des Standard AS-i Kommunikationssignals das Kommunikationsbauteil (31) eine erste Analog/Digital-Wandlereinheit und zum Empfangen des erweiterten AS-i Kommunikationssignals das Kommunikationsbauteil (31) eine zweite Analog/Digital-Wandlereinheit umfasst, wobei vorzugsweise die erste Analog/Digital-Wandlereinheit einen Hochpassfilter und die zweite Analog/Digital-Wandlereinheit einen Tiefpassfilter umfasst.

6. Kommunikationsbauteil (31) nach einem der Ansprüche 1 bis 4, wobei zum Empfangen des Standard AS-i Kommunikationssignals und des erweiterten AS-i Kommunikationssignals das Kommunikationsbauteil (31) eine gemeinsam genutzte Analog/Digital-Wandlereinheit (32) umfasst.

7. Kommunikationsbauteil (31) nach Anspruch 5 oder 6, wobei der Analog/Digital-Wandlereinheit (32) für das erweiterte Kommunikationssignal eine FFT-Einheit (26) und für das Standard AS-i Kommunikationssignal eine Empfangdateneinheit (16) nachgeschaltet ist und das Kommunikationsbauteil (31) die FFT-Einheit (26) und die Empfangdateneinheit (16) umfasst.

8. Kommunikationsbauteil (31) nach einem der vorhergehenden Ansprüche, wobei zum Senden des Standard AS-i Kommunikationssignals das Kommunikationsbauteil (31) eine Standard-Treibereinheit (14) und zum Senden des erweiterten AS-i Kommunikationssignals das Kommunikationsbauteil (31) eine OFDM-Treibereinheit (24) umfasst.

9. Kommunikationsbauteil (31) nach einem der vorhergehenden Ansprüche, wobei zum Senden des Standard AS-i Kommunikationssignals und des erweiterten AS-i Kommunikationssignals das Kommunikationsbauteil (31) eine gemeinsam genutzte Digital/Analog-Wandlereinheit umfasst.

10. AS-i Modul (30), welches ein Kommunikationsbauteil (31) nach einem der Ansprüche 1 bis 9 zur Kommunikation über einer AS-i Leitung (11) umfasst.

11. AS-i Modul (30), nach Anspruch 10, wobei dem Kommunikationsbauteil (31) zum Senden eines Standard AS-i Kommunikationssignals und eines erweiterten AS-i Kommunikationssignals über die AS-i Leitung (11) eine OFDM-Treibereinheit (24) und/oder Standard-Treibereinheit (14) nachgeschaltet ist.

12. Verfahren zum Senden und/oder Empfangen von Kommunikationssignalen über eine AS-i Leitung (11), wobei zum Senden und/oder Empfangen eines Standard AS-i Kommunikationssignals und eines erweiterten AS-i Kommunikationssignals das gemeinsame Kommunikationsbauteil (31) genutzt wird, **dadurch gekennzeichnet, dass** das zum Senden und/oder Empfangen genutzte Frequenzspektrum des erweiterten AS-i Kommunikationssignals im Bereich von 1 MHz bis 10 MHz liegt.

13. Verfahren zum Senden und/oder Empfangen von Kommunikationssignalen über eine AS-i Leitung (11) nach Anspruch 12, wobei das Senden und/oder Empfangen des erweiterten AS-i Kommunikationssignals mittels des Orthogonal Frequency Division Multiplex Verfahren erfolgt.

14. Verfahren zum Senden und/oder Empfangen von Kommunikationssignalen über eine AS-i Leitung (11) nach Anspruch 12, wobei das Standard AS-i Kommunikationssignal und das erweiterte AS-i Kommunikationssignals über eine gemeinsam genutzte Analog/Digital-Wandlereinheit (32) empfangen wird.

15. Verfahren zum Senden und/oder Empfangen von Kommunikationssignalen über eine AS-i Leitung (11) nach Anspruch 12, wobei das Standard AS-i Kommunikationssignal und das erweiterte AS-i Kommunikationssignals über eine gemeinsam genutzte Digital/Analog-Wandlereinheit gesendet wird.

## Claims

1. Communication component (31) for communicating via an AS-i line (11), wherein a standard AS-i communication signal and an extended AS-i communication signal are sent and/or received via an AS-i line (11) by way of the shared communication component (31), **characterised in that** the frequency spectrum used for sending and/or receiving the extended AS-i communication signal lies in the 1 MHz to 10 MHz range.

2. Communication component (31) according to claim 1, wherein the communication component (31) is an ASIC or an FPGA device.

3. Communication component (31) according to one of the preceding claims, wherein the frequency spectrum used for sending and/or receiving the standard AS-i communication signal lies in the 50 kHz to 500 kHz range.

4. Communication component (31) according to one of the preceding claims, wherein the communication component uses the Orthogonal Frequency Division Multiplex method for sending and/or receiving the extended AS-i communication signal.

5. Communication component (31) according to one of the preceding claims, wherein the communication component (31) comprises a first analogue/digital converter unit for receiving the standard AS-i communication signal and a second analogue/digital converter unit for receiving the extended AS-i communication signal, wherein preferably the first analogue/digital converter unit comprises a high-pass filter and the second analogue/digital converter unit a low-pass filter.

6. Communication component (31) according to one of claims 1 to 4, wherein the communication component (31) comprises a shared analogue/digital converter unit (32) for receiving the standard AS-i communication signal and the extended AS-i communication signal.

7. Communication component (31) according to claim 5 or 6, wherein downstream of the analogue/digital converter unit (32) an FFT unit (26) is connected for the extended communication signal and a receive data unit (16) is connected for the standard AS-i communication signal, and the communication component (31) comprises the FFT unit (26) and the receive data unit (16).

8. Communication component (31) according to one of the preceding claims, wherein the communication component (31) comprises a standard driver unit (14) for sending the standard AS-i communication signal and an OFDM driver unit (24) for sending the extended AS-i communication signal.

9. Communication component (31) according to one of the preceding claims, wherein the communication component (31) comprises a shared digital/analogue converter unit for sending the standard AS-i communication signal and the extended AS-i communication signal.

10. AS-i module (30) which comprises a communication component (31) according to one of claims 1 to 9 for communicating via an AS-i line (11).

11. AS-i module (30) according to claim 10, wherein an OFDM driver unit (24) and/or a standard driver unit (14) are/is connected downstream of the communication component (31) for the purpose of sending a standard AS-i communication signal and an extended AS-i communication signal via the AS-i line (11).

12. Method for sending and/or receiving communication signals via an AS-i line (11), wherein the shared communication component (31) is used for sending and/or receiving a standard AS-i communication signal and an extended AS-i communication signal, **characterised in that** the frequency spectrum used for sending and/or receiving the extended AS-i communication signal lies in the 1 MHz to 10 MHz range.

13. Method for sending and/or receiving communication signals via an AS-i line (11) according to claim 12, wherein the extended AS-i communication signal is sent and/or received by means of the Orthogonal Frequency Division Multiplex method.

14. Method for sending and/or receiving communication signals via an AS-i line (11) according to claim 12, wherein the standard AS-i communication signal and the extended AS-i communication signal are received via a shared analogue/digital converter unit (32).

15. Method for sending and/or receiving communication signals via an AS-i line (11) according to claim 12, wherein the standard AS-i communication signal and the extended AS-i communication signal are sent via a shared digital/analogue converter unit.

## Revendications

1. Composant ( 31 ) de communication pour la communication par une ligne AS-i ( 11 ), dans lequel une émission et/ou une réception d'un signal de communication AS-i standard et d'un signal de communication AS-i étendu s'effectue par une ligne ( 11 ) AS-i par le composant ( 31 ) de communication commun, **caractérisé en ce qu'**un spectre de fréquence utilisé pour l'émission et/ou la réception du signal de communication AS-i étendu est dans la plage de 1 Mhz à 10 MHz.

2. Composant ( 31 ) de communication suivant la revendication 1, dans lequel le composant ( 31 ) de communication est un module ASIC ou un module FPGA.

3. Composant ( 31 ) de communication suivant l'une des revendications précédentes, dans lequel le spectre de fréquence utilisé pour l'émission et/ou pour la réception du signal de communication AS-i standard est dans la plage allant de 50 kHz à 500 kHz.

4. Composant ( 31 ) de communication suivant l'une des revendications précédentes, dans lequel le composant de communication utilise le procédé Orthogonal Frequency Division Multiplex pour l'émission et/ou la réception du signal de communication AS-i étendu.

5. Composant ( 31 ) de communication suivant l'une des revendications précédentes, dans lequel, pour la réception du signal de communication AS-i standard, le composant ( 31 ) de communication comprend une première unité de convertisseur analogique/numérique et, pour la réception du signal de communication AS-i étendu, le composant ( 31 ) de communication comprend une deuxième unité de convertisseur analogique/numérique, de préférence la première unité de convertisseur analogique/numérique comprenant un filtre passe-haut et la deuxième unité de convertisseur analogique/ numérique un filtre passe-bas.

6. Composant ( 31 ) de communication suivant l'une des revendications 1 à 4, dans lequel pour la réception du signal de communication AS-i standard et du signal de communication AS-i étendu, le composant ( 31 ) de communication comprend une unité ( 32 ) de convertisseur analogique/numérique utilisée conjointement.

7. Composant ( 31 ) de communication suivant la revendication 5 ou 6, dans lequel une unité FFT ( 26 ) est montée en aval de l'unité ( 32 ) de convertisseur analogique/numérique, pour le signal de communication AS-i étendu, et une unité ( 16 ) de données de réception est montée en aval, pour le signal de communication AS-i standard, et le composant ( 31 ) de communication comprend l'unité FFT ( 26 ) et l'unité ( 16 ) de données de réception.

8. Composant ( 31 ) de communication suivant l'une des revendications précédentes, dans lequel, pour l'émission du signal de communication AS-i standard, le composant ( 31 ) de communication comprend une unité ( 14 ) d'attaqueur standard et, pour l'émission du signal de communication AS-i étendu, le composant ( 31 ) de communication comprend une unité ( 24 ) d'attaqueur OFDM.

9. Composant ( 31 ) de communication suivant l'une des revendications précédentes, dans lequel, pour l'émission du signal de communication AS-i standard et du signal de communication AS-i étendu, le composant ( 31 ) de communication comprend une unité de convertisseur numérique/analogique utilisée conjointement.

10. Module ( 30 ) AS-i, qui comprend un composant ( 31 ) de communication suivant l'une des revendications 1 à 9, pour la communication par une ligne ( 11 ) AS-i.

11. Module ( 30 ) AS-i suivant la revendication 10, dans lequel, en aval du composant ( 31 ) de communication, est montée, pour l'émission d'un signal de communication AS-i standard et d'un signal de communication AS-i étendu, par la ligne ( 11 ) AS-i, une unité ( 24 ) d'attaqueur OFDM et/ou une unité ( 14 ) d'attaqueur standard.

12. Procédé d'émission et/ou de réception de signaux de communication par une ligne ( 11 ) AS-i, dans lequel on utilise, pour l'émission et/ou la réception d'un signal de communication AS-i standard et d'un signal de communication AS-i étendu, le composant ( 31 ) de communication conjoint, **caractérisé en ce que** le spectre de fréquence utilisé pour l'émission et/ou la réception du signal de communication AS-i étendu est dans la plage de 1 MHz à 10 MHz.

13. Procédé d'émission et/ou de réception de signaux de communication par une ligne ( 11 ) AS-i suivant la revendication 12, dans lequel on effectue l'émission et/ou la réception du signal de communication AS-i étendu au moyen du procédé Orthogonal Frequency Division Multiplex.

14. Procédé d'émission et/ou de réception de signaux de communication par une ligne ( 11 ) AS-i suivant la revendication 12, dans lequel on reçoit le signal de communication AS-i standard et le signal de communication AS-i étendu par une unité ( 32 ) de convertisseur analogique/numérique utilisée conjointement.

15. Procédé d'émission et/ou de réception de signaux de communication par une ligne ( 11 ) AS-i suivant la revendication 12, dans lequel on émet le signal de communication AS-i standard et le signal de communication AS-i étendu par une unité de convertisseur numérique/analogique utilisée conjointement.
